# EUROPEAN PATENT APPLICATION

(11) **EP 1 371 613 A1**
(43) Date of publication of application: **17.12.2003**
(21) Application number: 01972475.6
(22) Date of filing: 26.09.2001
(51) Int. Cl.: C02F 11/12, C02F 1/24, C02F 1/20

(54) **METHOD AND DEVICE FOR FLUID TREATMENT**

(30) Priority: 12.03.2001 JP 2001069058; 27.03.2001 JP 2001090491
(71) Applicant: EBARA CORPORATION, Ohta-ku, Tokyo 144-8510 (JP)
(72) Inventor: HAGINO, Takao, Tokyo 144-8510 (JP); HATA, Ryosuke, Tokyo 144-8510 (JP); IRIUCHIJIMA, Yoshiharu, Tokyo 144-8510 (JP); YOSHIDA, Hideki, Tokyo 144-8510 (JP)
(74) Representative: Wagner & Geyer
(86) International application number: JP0108330
(87) International publication number: WO02074703

(57) **Abstract**

The present invention relates to a technology which can efficiently concentrate a suspension liquid which needs to be concentrated in sewage treatment plants or various waste water treatment plants, particularly sludge or the like which contains a large amount of odor components which will adversely be decayed and is hard to concentrate. The present invention can prevent odor substances from being produced in a concentration process, and can remarkably reduce the amount of odor components, carbonic acid, and the like contained in concentrated sludge or a lower separated liquid. Specifically, in a process of concentrating or dewatering residual evaporated substances in a liquid, when sludge is held under a reduced pressure of 5 to 70 kPa for less than 15 minutes, a portion of gas components dissolved in the liquid is changed into gaseous phase, and activation of microorganisms in the liquid is restricted. After a decompressing process is performed under the reduced pressure, the liquid is introduced into a gravity concentration tank for gravity concentration, or the decompressed liquid or the gravity-concentrated sludge is introduced into a flocculation reaction tank for flocculation, and is then dewatered by a dewatering device.

## Description

### Technical Field

The present invention relates to a technology of separating a portion of a plurality of components contained in a liquid according to an intended use, and more particularly to a method and apparatus of treating a liquid in which floating suspension materials, oils, or the like are required to be concentrated in sewage treatment plants, various waste water treatment plants, or the like.

More specifically, the present invention relates to a technology which employs a phenomenon in which a gas component is emitted from a suspension liquid into gaseous phase by introducing the liquid into a hermetically sealed vessel and holding the liquid under a reduced pressure, thereby improving gravity concentration, a flocculating tendency, and dewaterability of sludge after a decompression process and reducing the amount of odor produced. Further, the present invention relates to a sludge treatment technology which can dispense with a concentration process such as gravity concentration or centrifugal concentration by the fact that a mechanism for removing separated water to an exterior of a system is added to a flocculation reaction device to concentrate flocculated sludge and to directly dewater the flocculated and concentrated sludge. Further, the present invention relates to a technology which can attach bubbles produced in the device to floating solid materials or the like, can derive a floating concentrated liquid which rises up together with the bubbles to the exterior, and can considerably improve the efficiency of subsequent processes such as concentration, flocculation, and dewatering by adding a mechanism for drawing a liquid from an upper and bottom portion of the decompressing device or the like.

### Background Art

Various processes of separating a portion of a liquid are performed in manufacturing processes or waste water treatment processes. Various concentration processes have been adopted in water treatment processes, particularly processes of concentrating suspension materials in a suspension liquid. Processes of concentrating a suspension liquid are mostly evaluated as important processes which determine processing speeds of subsequent processes. Concentration methods generally used include a gravity concentration method in which a specific gravity difference is employed with an inverse circular conic gravity thickening tank or the like to concentrate floating suspension materials by gravity settling, a flocculating settling concentration method in which floating suspension materials are concentrated by gravity settling after a flocculating agent is added and mixed into a suspension liquid, a pressurizing floatation method in which a suspension liquid is pressurized in a liquid-gaseous mixed state and then released to atmospheric pressure to produce bubbles in the suspension liquid, and to thus derive, as concentrated sludge, floating solid materials attached to the bubbles which rise up, and a centrifugal concentration method in which a suspension liquid is supplied into a drum rotating at a high speed to separate the suspension liquid into solid and liquid by centrifugal forces. However, these concentration methods have the requirements that objects to be treated should have a good settling tendency and a large difference in density, and that bubbles attached to solid materials should be removed easily. Moreover, in a case of a suspension liquid in which a large amount of odor components is dissolved, odor components are produced in these concentration processes to worsen the working environment in the concentration processes.

A specific example will be described. In an intensive sludge treatment plant or the like which collectively treats sludge produced from a plurality of sewage treatment plants in a metropolitan area or the like, sludge transported through pipelines from the respective treatment plants (which is referred to as arrival sludge) has a long residence time, particularly in a closed space, and is intensively decayed in many cases. If sludge is decayed, then the amount of odor components produced from the sludge becomes larger when the sludge is released into the atmosphere because the sludge contains a large amount of fine gas components such as hydrogen sulfide or carbonic acid. Simultaneously, the flocculating tendency and dewaterability are considerably worsened in many cases. These types of sludge are unlikely to be concentrated by gravity settling concentration or mechanical concentration, and production of odor cannot be prevented in the concentration process. Moreover, these types of sludge have a disadvantage in that treatment performance is lowered in a subsequent flocculating process or dewatering process of the sludge. These problems result in larger deodorization equipment, an increased addition of a flocculating agent, and an increased water content in dewatered cake, and hence cause higher costs of a plant and running of the plant.

### Disclosure of Invention

The present invention has an object of solving the aforementioned problems of the prior art. Specifically, an object of the present invention is to provide a technology which can efficiently concentrate a suspension liquid which needs to be concentrated in sewage treatment plants or various waste water treatment plants, particularly sludge or the like, which contains a large amount of odor components which would adversely be decayed and is hard to be concentrated. Further, an object of the present invention is to provide a suspension liquid concentration method which can prevent odor substances from being produced in a concentration process, can remarkably reduce the amount of odor components, carbonic acid, and the like contained in concentrated sludge or a lower separated liquid after the concentration process to remarkably reduce the production of odor, can remarkably reduce the amount of odor components emitted from sludge to a working environment in a subsequent flocculating process, dewatering process, or the like, and can remove fine bubbles which would adversely affect a flocculating tendency and dewaterability in subsequent processes to improve the a flocculating tendency and the dewaterability of the sludge.

In order to solve the above problems, the inventors have diligently studied the problems and have discovered that, when sludge is subject to a decompressing process under predetermined conditions, it is possible to reduce the amount of odor components produced from the sludge and improve gravity concentration, a flocculating tendency, and dewaterability of the sludge. Thus, the inventors have made the present invention based on the above knowledge.

Specifically, the present invention has solved the above problems by the following means.
(1) In a process of concentrating or dewatering residual evaporated substances in a liquid, when sludge is held under a reduced pressure of 5 to 70 kPa for less than 15 minutes, a portion of gas components dissolved in the liquid is shifted into gaseous phase, and activation of microorganisms in the liquid is restricted. After a decompressing process is performed under the reduced pressure, the liquid is introduced into a gravity concentration tank for gravity concentration, or the decompressed liquid or the gravity-concentrated sludge is introduced into a flocculation reaction tank for flocculation, and then is dewatered by a dewatering device.
(2) After the decompressing process is performed, the liquid is flocculated directly in a flocculation reaction tank without being introduced into a gravity concentration tank, and is dewatered by a dewatering device. The flocculation reaction tank prior to dewatering comprises a concentration-type flocculation reaction tank in which a portion of separated water produced in the flocculation reaction tank is removed to an exterior of a system to increase the concentration of the flocculated sludge to be introduced into the dewatering device.
(3) A decompressing device comprises a hermetically sealed vessel connected to three pumps, i.e., a liquid supply pump, a vacuum pump, and a liquid drawing pump, and has a mechanism in the vessel for forming a liquid supplied under a reduced pressure into a thin film and for applying a shearing force. Further, the decompressing device can continuously supply and continuously discharge the liquid.
(4) In a concentration-type flocculation reaction tank, a liquid and a flocculating agent are supplied from a lower portion of the tank, and the liquid and the flocculating agent are mixed by an agitating device rotating in the tank. Only separated water is discharged to the exterior of a system by a cylindrical separation screen provided at an upper portion of the tank, and a scraper for removing flocculated floc attached to the separation screen is coupled to the agitating device via a speed reducer and is rotated.
(5) With regard to the liquid introduced into the decompressing device, a liquid near a water surface in the device and a liquid near a bottom surface in the device are continuously discharged separately to the exterior of the vessel.
(6) A liquid containing floating suspension materials is treated. Bubbles produced from the liquid under a reduced pressure are attached to the floating suspension materials, and a portion or all of the floating suspension materials which have risen up together with the bubbles and been concentrated, and a remaining liquid which has been lowered in concentration of the floating suspension materials, are separately discharged.
(7) A device for separating a liquid comprises a hermetically sealed vessel having a mechanism for adjusting a water level to a desired level in the vessel, means for supplying a liquid to be treated into the vessel, means for decompressing gaseous phase at an upper portion of said vessel, means for continuously discharging a portion of the liquid under a reduced pressure from a lower portion of the vessel, and means for continuously discharging a portion near a water surface of the liquid under a reduced pressure.
(8) A liquid containing floating suspension materials is treated. In a process of concentrating the floating suspension materials, the liquid is separated with a liquid separation device described in (7) above. A liquid drawn from near the bottom surface in the device is introduced into a gravity settling concentration tank to form settled and concentrated sludge. Further, the settled and concentrated sludge is mixed with floating and concentrated sludge drawn from the liquid near the water surface in the liquid separation device to produce mixed sludge as final concentrated sludge.

### Brief Description of Drawings

FIG. 1 is a flow diagram showing a liquid treatment method in a Case 1 according to the present invention.
FIG. 2 is a flow diagram showing a liquid treatment method in a Case 2 according to the present invention.
FIG. 3 is a flow diagram showing a liquid treatment method in a Case 3 according to the present invention.
FIG. 4 is a flow diagram showing a conventional liquid treatment method corresponding to Cases 1,2, and 3.
FIG. 5A is a graph showing a ratio of activation of microorganisms to decompressing time, FIG. 5B is a graph showing a magnification of settling concentration after a decompression process with respect to decompressing time, and FIG. 5C is a ratio of the concentration of soluble phosphorus in the sludge after a decompression process to decompressing time.
FIG. 6 is a cross-sectional view showing a decompressing device suitable for a decompression process according to the present invention.
FIG. 7 is a cross-sectional view showing a concentration-type flocculation reaction device suitable for a decompression process according to the present invention.
FIG. 8 is a cross-sectional view showing a modification of the concentration-type flocculation reaction device shown in FIG. 7.
FIG. 9 is a perspective view of a portion of a screen in the concentration-type flocculation reaction device.

### Best Mode for Carrying Out the Invention

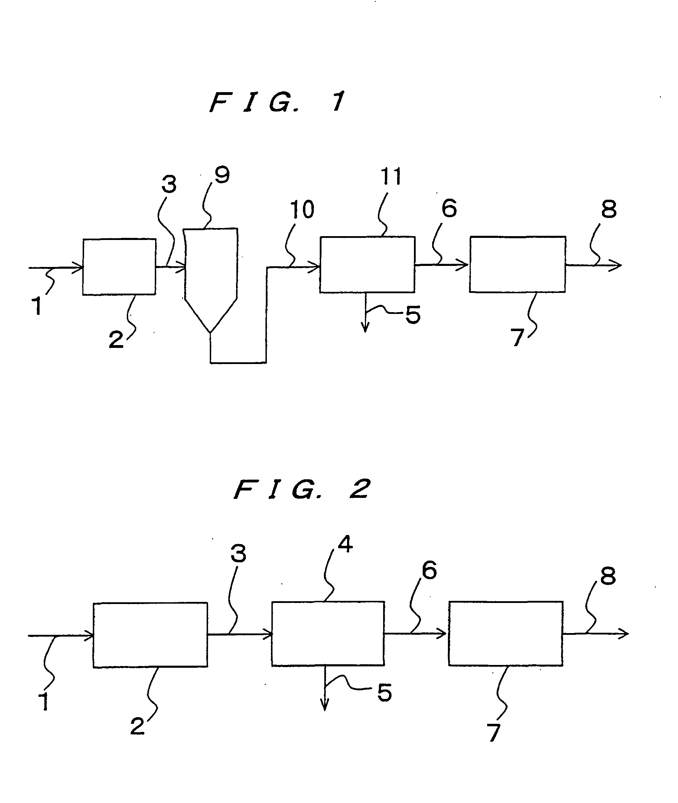

Embodiments of the present invention will be described below in detail with reference to the accompanying drawings. Three types of treatment methods will be described as examples. FIGS. 1, 2 and 3 are block diagrams showing three sludge treatment methods according to the present invention.

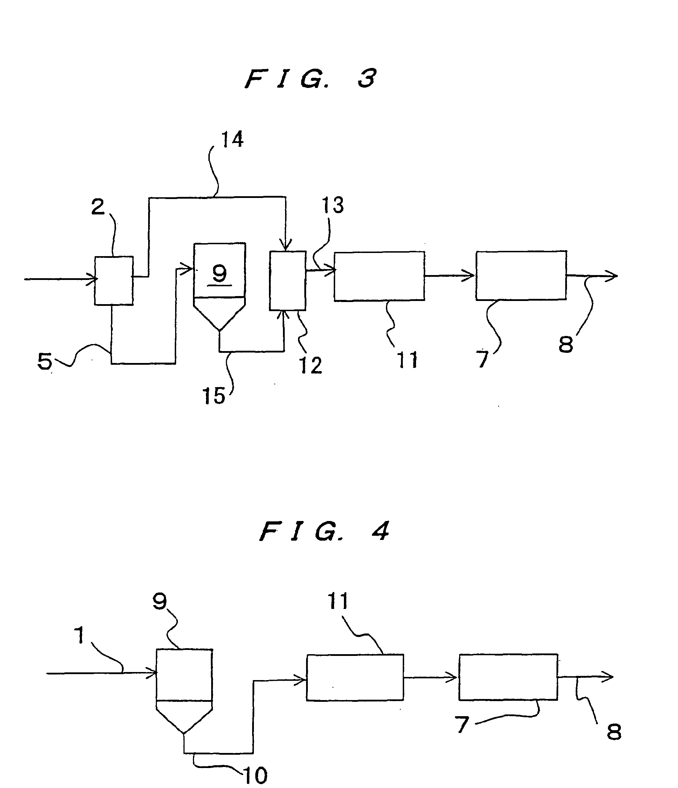

FIG. 1 shows a process in which sludge is decompressed and deaerated under predetermined conditions in a decompressing device 2, and the decompressed and deaerated sludge 3 is concentrated under gravity and is then treated in a subsequent flocculation reaction device 11 and a dewatering device 7. FIG. 2 shows a similar process in which sludge is decompressed and deaerated in a decompressing device 2 and is treated directly in a concentration-type flocculation reaction tank 4 and a dewatering device 7 without gravity concentration. FIG. 3 shows a process in which suspension materials or the like in sludge are decompressed and deaerated under similar conditions in a decompressing device 2, sludge that has risen up and has been concentrated is delivered to a mixing tank whereas sludge that has not risen up is concentrated under gravity, the gravity-concentrated sludge is delivered to the mixing tank so as to be mixed with the floating and concentrated sludge, and the mixed sludge is flocculated in a flocculation reaction tank 4 and dewatered in a dewatering device 7. The treatment methods shown in FIGS. 1, 2 and 3 will hereinafter be explained as Case 1, Case 2, and Case 3, respectively.

FIG. 4 is a block diagram showing a conventional process for comparative purposes.. Flowing sludge 1 transported through pipelines is concentrated under gravity in a gravity concentration tank 9 to produce concentrated sludge 10. The concentrated sludge 10 is flocculated in a flocculation reaction tank 11 to produce flocculated floc 6. The flocculated floc is dewatered in a dewatering device 7 to produce dewatered cake 8.

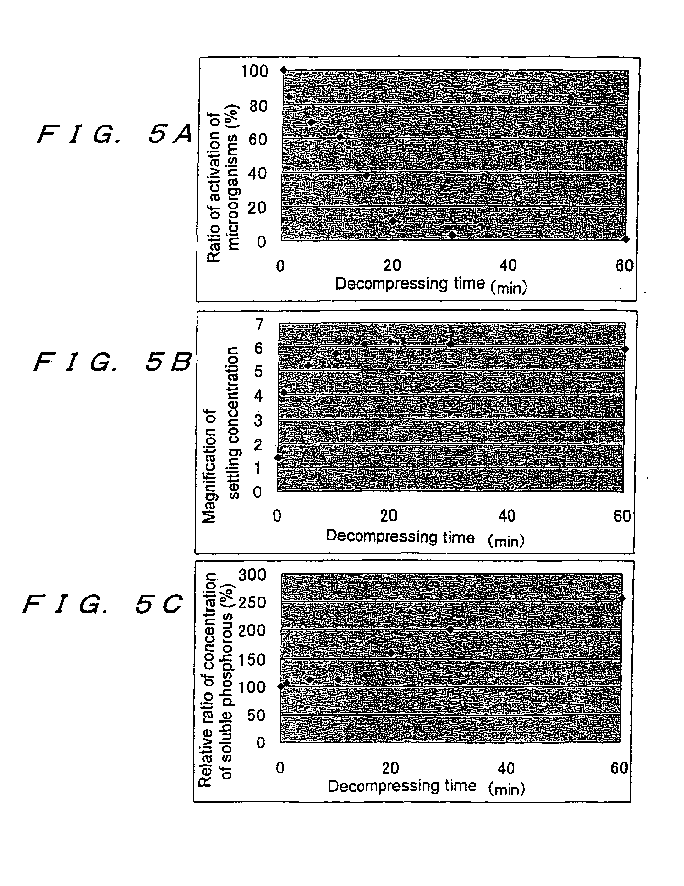

In the processes shown in Cases 1 through 3 according to the present invention, the flowing sludge is initially decompressed and deaerated in the decompressing device 2. In the decompressing and deaerating process, a liquid is held under a reduced pressure to shift liquid components contained or dissolved in the liquid into gaseous phase and to restrict activation of microorganisms in the liquid. This process is performed such that a liquid is held under a decompressed atmosphere having a pressure of 5 to 70 kPa for less than 15 minutes. The decompressing and deaerating process should preferably employ an apparatus shown in FIG. 5, which will be described later.

Next, a decompressing and deaerating process of sludge with use of the decompressing device 2 will be described below. Sludge is continuously supplied to a deaerating device by a sludge supply pump. In the decompressing device 2, a decompressed state of 5 to 70 kPa is always maintained by a vacuum pump having a pipe connected to an upper portion of the device. The sludge supplied to the device is accelerated under centrifugal forces on a screen member having a bottom and rotating at a high speed in the device and is formed into a thin film on the screen member. Sludge particles in the form of a thin film are efficiently deaerated under a decompressed atmosphere. Further, the sludge particles are collided with a wall surface of the vacuum vessel under the centrifugal forces to promote the deaerating effect. Furthermore, since the sludge is held under a decompressed atmosphere for a predetermined period of time, activation of microorganisms is prevented. These physical processes can almost completely remove even extremely fine bubbles in the sludge which would inhibit a flocculating tendency and dewaterability.

In a sludge treatment process disclosed by the inventors' Japanese patent application No. 11-82331 titled "METHOD OF INACTIVATING MICROORGANISMS IN SLUDGE, APPARATUS FOR INACTIVATING MICROORGANISMS IN SLUDGE, AND SLUDGE", a decompression process can inactivate sludge and reduce the amount of gas components in the sludge. While the patent application adopts reduced pressure conditions for the purpose of inactivation of microorganisms, one of the features of the present invention is that a decompression process is performed to prevent activation of microorganisms to a certain extent. Specifically, the inventors have discovered that activation of microorganisms can be prevented when sludge to be treated is held under a reduced pressure of 5 to 70 kPa for less than 15 minutes in the decompressing device 2 and thus have made the present invention. The present invention has the same objects as the aforementioned patent application in view of concentration, flocculation, and dewaterability of sludge. However, the present invention can achieve these objects without the application of energy large enough to inactivate microorganisms. Because complete inactivation of microorganisms may cause another problem in a subsequent process, the present invention adopts the aforementioned conditions.

According to a method of inactivating microorganisms in sludge which is disclosed by Japanese patent application No. 11-82331 filed by the inventors, "According to the present invention, ... a method of inactivating microorganisms cannot kill microorganisms in sludge but can inactivate microorganisms in sludge approximately for 24 hours to 48 hours." Here, the expression "inactivating microorganisms" means "activities of microorganisms are reduced so that the amount of gas components such as hydrogen sulfide or carbon dioxide which would be produced by biological metabolism if microorganisms had activity is made zero at least for 24 hours to 48 hours or considerably reduced." Here, it is estimated that a state in which microorganisms hardly emit gaseous matter by metabolism is caused by the fact that the microorganisms are physically damaged by shearing forces caused by pressure reduction and collision, and in this sate, microorganisms are killed or cannot perform normal biological metabolism even if they are not killed.

The inventors researched in greater detail the inactivation process of microorganisms, gravity concentration of sludge, and changes of quality of sludge water after filing Japanese patent application No.11-82331. As a result, the inventors have discovered the following. If an inactivation process of microorganisms is performed to a degree higher than a certain degree, then variation of the properties of sludge is caused, which is adverse in view of the entire water treating process. Further, with regard to the settling tendency of sludge, even if the inactivation of microorganisms is performed to a degree lower than a certain degree, a sufficiently high settling capability can be obtained.

FIGS. 5A through 5C show a portion of data of the research. These drawings include a graph (FIG. 5A) showing a ratio of activation of microorganisms when a decompression process is performed on sludge with a decompressing device, a graph (FIG. 5B) showing a magnification of settling concentration after the decompression process, and a graph (FIG. 5C) showing a ratio of concentration of soluble phosphorus in the sludge after the decompression process (to that before the decompression process). Here, "a ratio of activation of microorganisms" is defined as a relative ratio (%) of the amount of gaseous matter (gas) produced from microorganisms in sludge within 48 hours after a decompression process under reduced pressure conditions to the amount of gaseous matter (gas) produced from microorganisms in sludge within 48 hours without a decompression process.

As a decompression process was performed for a longer time, the ratio of activation of microorganisms lowered, and a magnification of settling concentration and a relative ratio of concentration of soluble phosphorus increased. It can be seen from a ratio of activation of microorganisms in FIG. 5A that it is necessary to perform the decompressing process for 30 minutes or longer in order to completely inactivate the microorganisms, and that if the decompressing process is performed for less than 15 minutes, then microorganisms are not completely inactivated. However, one of the objects of the present invention is to enhance the settling concentration of sludge after the decompressing process. Accordingly, as long as the settling concentration can be improved, microorganisms may not be completely inactivated. A shortened time for a decompression process can make the device compact in size and has an advantage in view of the manufacturing costs of the device. Further, if a decompression process is performed on microorganisms for a long time, then the number of microorganisms having broken cell walls is increased, so that soluble phosphoric components or the like, which have existed in the cell bodies of the microorganisms, are likely to be eluted from the cell bodies. If the concentration of soluble phosphorus in the sludge is increased, then the concentration of phosphorous in a dewatered filtrate of the sludge is increased, so that finally the phosphorus is returned in return water to a water treatment system.

Recently, it has been very important to take measures to remove phosphorus and nitrogen in sewage treatment plants, and it has been required to minimize a process causing an increase of the concentration of phosphorus in return water. From the foregoing description, a process according to the present invention, which restricts activation of microorganisms in a decompression process to a minimum level, has various advantages as compared to a process which simply inactivates microorganisms.

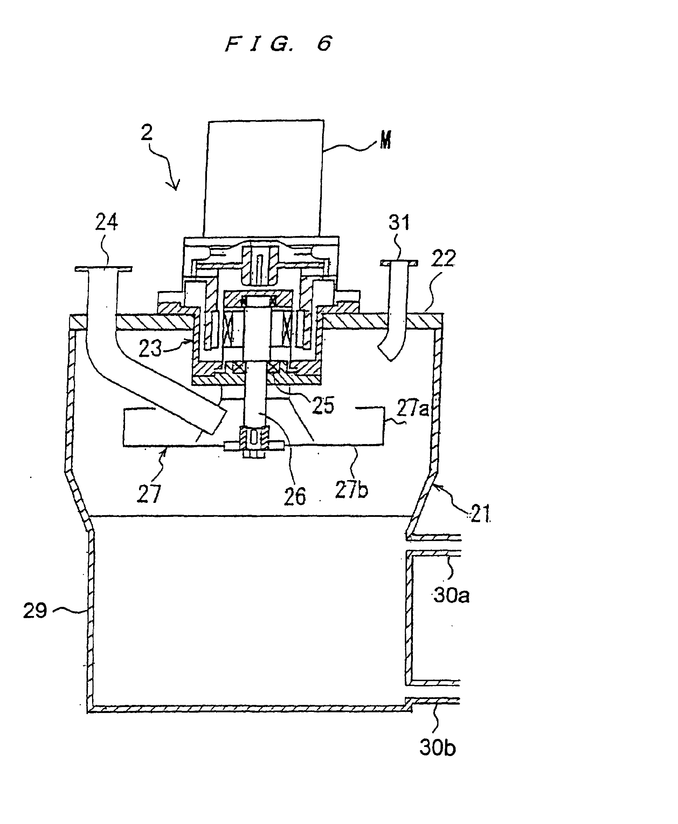

FIG. 6 shows a continuous deaerating device (decompressing device) suitable for a decompression process according to the present invention. The continuous deaerating device has a rotary screen 27 provided at an upper portion in a vacuum vessel 21, and a supply port of a supply pipe 24 opens at a central portion of the rotary screen so that sludge to be deaerated is supplied onto the rotary screen 27. The vacuum vessel 21 has a cylindrical inner wall at an upper portion thereof and a storage portion 29 in the form of a cylindrical vessel extending downward from the inner wall. A main shaft 26 is provided on a lid 22 at a central position of a partitioning member 23 projecting into the vacuum vessel 21, and the rotary screen 27, comprising a cylindrical screen member 27a made of a punching plate and a circular plate 27b, is fixed to a lower end of the main shaft 26.

Sludge is dropped through the supply pipe 24 onto the rotary screen 27, which is rotated by a motor M, and when or after it passes through fine holes formed in the screen in a state such that it is accelerated in radial directions under centrifugal forces, speeding particles are produced and collided with an inner wall of the vacuum vessel to perform primary deaerating. The sludge which has passed through the rotary screen 27 is stored in the storage portion 29 disposed below the rotary screen, where a decompression process is performed on the sludge under a decompressed atmosphere, and is continuously drawn through an upper draw pipe 30a or a lower draw pipe 30b by a pump which is not shown. A portion of the gaseous phase in the vacuum vessel 21 is discharged through a discharge pipe 31 by a vacuum pump which is not shown, so that the interior of the vacuum vessel is maintained at a decompressed atmosphere having a pressure of 5 to 70 kPa in a decompression process according to the present invention. In this device, since it is necessary to perform a decompressing process for a predetermined period of time so as to prevent (restrict) activation of microorganisms, the device has a flow rate control means for controlling residence time in the vessel and a liquid level control means.

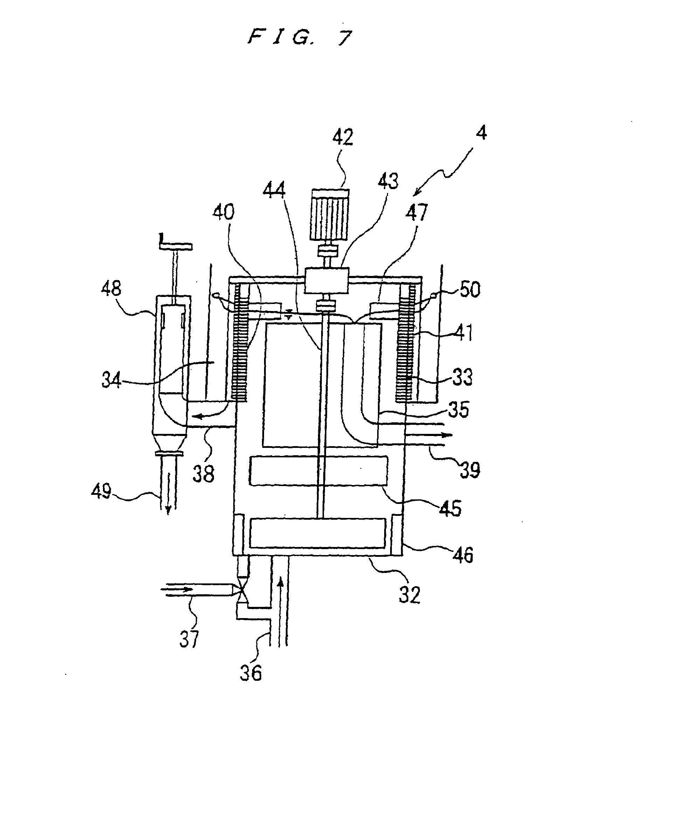

For example, the tanks shown in FIGS. 7 through 9 may be used as the concentration-type flocculation reaction tank 4. As shown in the vertical cross-sectional view of FIG. 7, in the concentration-type flocculation reaction tank 4, a draft tube 35 is disposed at an upper portion of a tank body 32 having a screen 33 as an upper wall, and an agitating impeller 45 supported by a shaft 44 is disposed at a lower portion of the tank body 32. Sludge is supplied from a sludge supply pipe 36 disposed at a lower portion of the flocculation reaction tank, together with a polymer from a polymer supply pipe 37, and agitated in the tank body 32 by the agitating impeller 45 to perform a flocculation reaction. The flocculated sludge is filtered by the screen 33, and the separated water which has passed through the screen 33 is introduced into a separated water reservoir 34 and flows through a rising pipe 38, a telescope valve 48 and a separated water discharge pipe 49. Since the sludge which has been blocked by the screen 33 may clog the screen 33, a primary brush 40 provided inwardly of the screen 33 and a secondary brush 41 provided outwardly of the screen 33 are rotated to clean the screen 33.

The filtration by the screen 33 concentrates the sludge, and the concentrated sludge is discharged from a concentrated sludge discharge pipe 39 opened near the liquid level in the tank body 32.

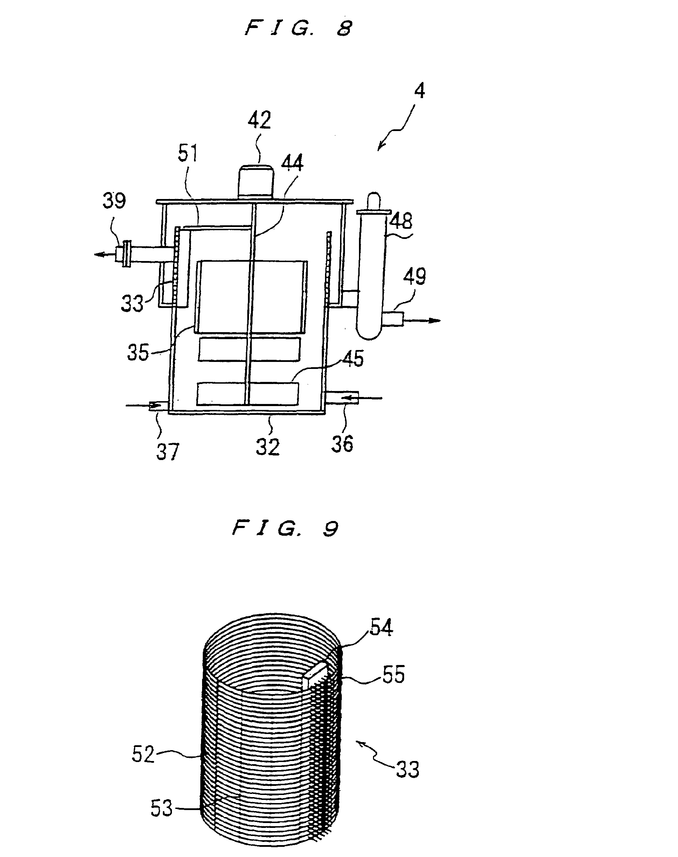

The screen 33 has a structure as shown in FIG. 9 and comprises wedge wires 52 and support bars 53. Only a brush 54 serving as the primary brush 40 is shown in FIG. 9. This brush 54 is rotated and moved in a circumferential direction along an inner surface of the screen 33 so that bristles 55 of the brush 54 scratch the screen 33 to remove flocculated sludge clogging the screen 33. This operation allows concentration of the flocculated sludge to be performed continuously.

FIG. 8 is a vertical cross-sectional view of another type of a concentration-type flocculation reaction device. A concentrated sludge discharge pipe 39 is attached directly to the screen 33 so as to penetrate the screen 33 and to be opened to the interior of the flocculation reaction tank. A scraper 51 rotating along an inner surface of the screen 33 scrapes the concentrated sludge on the inner surface of the screen 33, and the concentrated sludge which is thus collected is removed from the opening through the concentrated discharge pipe 39 to the exterior.

Next, processes including a decompressing and deaerating process of sludge will be described below.

Organic sludge 1 is continuously supplied to a deaerating device 2 by a sludge supply pump, which is not shown. In the deaerating device 2, a decompressed state having a pressure of 5 to 70 kPa is always maintained with a vacuum pump, which is not shown, and has a pipe connected to an upper portion of the deaerating device 2.

The sludge 1 supplied to the device 2 is supplied onto the screen 27 having a circular plate and a circumferential wall made of a screen member around the circular plate, the screen being coupled to a main shaft and being rotated at a high speed in the device 2. The sludge 1 is accelerated under centrifugal forces on the screen and is formed into a thin film on the circular plate. Sludge particles in the form of a thin film are efficiently deaerated under a vacuum. Further, the sludge particles are collided with a wall surface of the vacuum vessel under the centrifugal forces to promote the deaerating effect. These physical processes can almost completely remove even extremely fine bubbles in the sludge which would inhibit a flocculating tendency and dewaterability. The screen member may be dispensed with, depending upon conditions such as the amount of night soil in the supplied sludge and the properties of the sludge.

The sludge which has passed through the screen 27 remains in a storage portion 29 and then is drawn through a draw pipe 30a or 30b. At that moment, the sludge is subject to a decompressing process for less than 15 minutes in the decompressing device 2 so as to restrict activities of microorganisms in the sludge. Therefore, the sludge which is subject to the decompressing process can have a sufficient settling tendency in subsequent processes. Since microorganisms in the sludge have activities to a certain extent, it is possible to prevent adverse effects such as an increase in the concentration of soluble phosphorus in the separated water or the like.

The deaerated sludge is continuously drawn from a lower portion of the deaerating device 2 to the exterior. At that moment, in a case of a liquid containing floating suspension materials, it is desirable to attach bubbles produced from the liquid under a reduced pressure to the floating suspension materials and to draw concentrated sludge which risies up together with the bubbles from the upper draw pipe 30a. Further, it is desirable to simultaneously draw the remaining liquid, which has a lowered concentration of the floating suspension materials, from the draw pipe 30b provided at a lower portion of the storage portion 29. Thus, in this device 2, it is possible to continuously discharge a liquid near the water surface and a liquid near the bottom surface separately into a vessel.

Next, subsequent processes will be described below. In Case 1, the deaerated sludge 3 into which the flowing sludge 1 has been deaerated in the decompressing device 2 is concentrated under gravity in the gravity concentration tank 9. Then, the sludge 10 concentrated under gravity is introduced into the flocculation reaction tank 11 to produce flocculated floc 6. Separated water 5 which has been separated as supernatant water in the flocculation reaction tank 11 is delivered to a water treatment system. The flocculated floc 6 is dewatered in the dewatering device 7 to produce dewatered cake 8.

In Case 2, the flowing sludge 1 which has been decompressed and deaerated in the decompressing device 2 is introduced into the concentration-type flocculation reaction tank 4. It is desirable to use a concentration-type flocculation reaction device shown in FIGS. 7 through 9 as the concentration-type flocculation reaction tank 4. The concentration-type flocculation reaction tank 4 comprises a concentration-type flocculation reaction device capable of performing flocculation of a liquid to be treated, separation and concentration in a single device, and has a screen provided for concentration. The deaerated sludge which has been introduced from the lower portion of the concentration-type flocculation reaction tank 4 is mixed and agitated with a polymer flocculating agent introduced from the lower portion of the concentration-type flocculation reaction tank 4 to produce flocculated floc in the concentration-type flocculation reaction tank. At that moment, since the sludge has been deaerated, there are no fine bubbles which would inhibit contact of sludge particles and the flocculating agent. Accordingly, the flocculating agent can efficiently entangle with the sludge particles to reduce the amount of the injected flocculating agent.

The flocculated floc 6 is filtered by the screen for concentration which is provided at an inner wall of the concentration-type flocculation reaction tank 4, and separated water 5 is discharged from the concentration-type flocculation reaction tank 4. The flocculated floc is concentrated by this process so as to provide a concentration of the sludge approximately two times to five times as high as that before the process. The flocculated floc 6 thus concentrated is discharged from the concentrated sludge discharge pipe to the exterior. Further, the flocculated floc is introduced into the dewatering device 7. At that moment, because the deaerating process produces flocculated floc 6 in which sludge and a flocculating agent are firmly bonded to each other, the water content of the dewatered cake 8 becomes lower than that in the conventional method.

Because this process does not use a gravity concentration tank or a centrifugal concentration device, which have been used in the conventional treatment method, spaces for these devices and the cost of power for these devices become unnecessary. Further, since the residence time of the sludge in a treatment plant becomes shorter, odor components produced from the sludge in the treatment plant can largely be reduced. Furthermore, since activities of microorganisms are restricted during the decompressing and deaerating process of the sludge, an adverse influence, such as increased concentration of phosphorus in separated water when microorganisms are completely inactivated, can be prevented.

Case 3 is suitable for cases of sludge containing many components of oil or the like. Bubbles produced and rising up in the decompressing device 2 have a lowered apparent specific gravity because they are attached to floating solid materials, oil having a small polarity, or the like. Therefore, these substances rise up together with the bubbles to near the water surface of the suspension liquid to form a floating and concentrated sludge layer near the water surface. The floating and concentrated sludge layer is continuously discharged to the exterior by a concentrated sludge discharge pump. A lower separated liquid from which a portion of floating solid materials in the suspension liquid has been removed is continuously discharged from the lower portion of the vessel to the exterior by a lower separated liquid discharge pump.

A controller controls flow rates of the respective pumps in response to signals from flow meters in the supply pump, the floating and concentrated sludge discharge pump, the lower separated liquid discharge pump, and the like, and from level meters provided in the device, so that the water level in the vessel is always maintained at a predetermined level. Most gaseous components such as hydrogen sulfide or methyl mercaptan dissolved in the suspension liquid are removed under a decompressed atmosphere from the floating and concentrated sludge and the lower separated liquid which have been subject to the decompressing process in the vessel. Accordingly, odor is largely reduced, and odor components produced during the flocculating process in the subsequent flocculation reaction tank 4 or during the dewatering process in the dewatering device 7 are largely reduced.

Although the floating and concentrated sludge which has been separated in the decompressing device 2 may be introduced directly into the flocculation reaction tank 4 and mixed and agitated with a polymer flocculating agent, the floating and concentrated sludge is delivered to the mixing tank 12 before being delivered to the flocculation reaction tank 4. Properties of the lower separated liquid separated in the decompression concentrating device 2 are different depending on the properties of the original suspension liquid. When the concentration of the suspension materials in the lower separated liquid is relatively low, the lower separated liquid is delivered as a concentrated separated liquid to a water treatment process. When the concentration of the suspension materials is relatively high, the lower separated liquid is concentrated by settling under gravity as a lower separated sludge in a conventional gravity concentration tank. Since the lower separated sludge has been subject to the decompressing process in the decompression concentrating device 2, it has considerably fewer fine bubbles which would inhibit the settling tendency, so that the suspension materials in the lower separated sludge have an extremely good settling tendency. The settled and concentrated sludge which has been concentrated in the gravity concentration tank is mixed in the mixing tank 12 with the floating and concentrated sludge, which has been separated in the decompression concentrating device 2, into a final concentrated sludge 13 and delivered to the subsequent flocculation reaction tank 11 and flocculated therein. At that moment, since the concentrated sludge has been subject to the decompressing process, there are extremely fewer fine bubbles which would inhibit contact of sludge particles and the flocculating agent. Accordingly, the flocculating agent can efficiently entangle with the sludge particles to reduce the amount of the injected flocculating agent.

Next, the flocculated floc 6 is introduced into the dewatering device 7 to produce dewatered cake 8. At that moment, because the decompressing process produces flocculated floc 6 in which sludge and a flocculating agent are firmly bonded to each other, the water content of the dewatered cake 8 becomes lower than that in the conventional method, and the treatment performance can be improved. Because this process can concentrate sludge without a gravity concentration tank or a centrifugal concentration device, which have been used in the conventional treatment method depending on the properties of the sludge, spaces for these devices and the cost of power for these devices become unnecessary. Further, since the residence time of the sludge in a treatment plant becomes shorter, odor components produced from the sludge in the treatment plant can be largely reduced. Furthermore, since activities of microorganisms are restricted during the decompressing and deaerating process of the sludge, an adverse influence, such as an increased concentration of phosphorus in separated water when microorganisms are completely inactivated, can be prevented.

When sludge contains much oil or the like, the oil can be concentrated with use of the decompression concentrating device 2 in the present system, irrespective of the concentration of suspension materials contained in a liquid to be treated. Generally, oil has a specific gravity smaller than water in many cases. However, water and oil in a state of emulsion are not separated. In such a case, when a liquid is under a reduced pressure, bubbles produced from the liquid have no polarity. Accordingly, the fine bubbles tend to be attached to oil or the like, which has a small polarity, and to rise up, so that the oil may be separated from the water. Application of this principle allows oil to rise up and to be concentrated and separated from liquid.

### [Examples]

Examples of operational results of treatment plants according to Cases 1, 2, 3 of the present invention will be described below. The present invention is not limited to the following examples.

Treatment plants according to a conventional method and Cases 1, 2, 3 of the present invention are examples in which sludge produced in a plurality of sewage treatment plants is delivered through pipelines to a single sludge plant to collectively treat the sludge.

A conventional sludge treatment plant comprises a gravity concentration tank 9 for receiving sludge delivered through pipelines from a plurality of sewage treatment plants and concentrating the sludge under gravity to produce concentrated sludge 10, a flocculation reaction tank 11 for mixing a polymer flocculating agent and the concentrated sludge 10 from the gravity concentration tank 9 to produce flocculated floc 6 and discharging the flocculated floc, and a beltpress-type dewatering device 7 for dewatering the flocculated floc 6 from the flocculation reaction tank 11 and discharging the flocculated floc as dewatered cake 8.

A treatment plant according to Case 1 of the present invention comprises a decompressing device 2 for decompressing and deaerating sludge 1 which has been received through pipelines, a gravity concentration tank 9 for concentrating the decompressed and deaerated sludge under gravity to produce concentrated sludge 10, a flocculation reaction tank 11 for mixing a polymer flocculating agent and the sludge from the deaerating device 2 to produce flocculated floc 6 and discharging the flocculated floc, and a beltpress-type dewatering device 7 for dewatering the flocculated floc from the flocculation reaction tank 11 and discharging the flocculated floc as dewatered cake 8. Here, in the decompressing device 2, a decompressing and deaerating process is performed under a decompressed atmosphere having a pressure of 5 to 70 kPa for less than 15 minutes.

A treatment plant according to Case 2 of the present invention comprises a decompressing device 2 for decompressing and deaerating sludge 1 which has been received through pipelines, a concentration-type flocculation reaction tank 4 for mixing a polymer flocculating agent and the sludge from the deaerating device 2 to produce flocculated floc 6 and to discharge separated water 5, and a beltpress-type dewatering device 7 for dewatering the flocculated floc 6 from the concentration-type flocculation reaction tank 4 and discharging the flocculated floc as dewatered cake 8. Similarly, in the decompressing device 2, a decompressing and deaerating process is performed under a decompressed atmosphere having a pressure of 5 to 70 kPa for less than 15 minutes.

A treatment plant according to Case 3 of the present invention comprises a decompressing device 2 for decompressing and deaerating sludge 1 which has been received through pipelines, a gravity concentration tank 9 for concentrating, under gravity, deaerated sludge 3a which has been drawn from the decompressed sludge at a bottom of the decompressing device 2 to produce settled and concentrated sludge 15, a concentrated sludge mixing tank 12 for mixing floating and concentrated sludge 14 which has been drawn from the decompressed sludge at an upper portion of the decompressing device 2 and the settled and concentrated sludge 15 which has been concentrated in the gravity concentration tank 9, a flocculation reaction tank 11 for mixing concentrated and mixed sludge 13 and a polymer flocculating agent to produce flocculated floc 6 and discharging the flocculated floc, and a beltpress-type dewatering device 7 for dewatering the flocculated floc 6 from the flocculation reaction tank 11 and discharging the flocculated floc as dewatered cake 8. Similarly, in the decompressing device 2, a decompressing and deaerating process is performed under a decompressed atmosphere having a pressure of 5 to 70 kPa for less than 15 minutes.

The sludge 1 delivered through pipelines to the sludge treatment plant is organic sewage sludge. During transportation over a long distance, fermentation is developed mainly due to metabolism of anaerobic microorganisms to form an environment in which various gases are likely to be produced. Further, because the sludge is delivered in a state such that it is pressurized to a certain extent by a conveying pump, a portion of the gases produced is contained in the sludge. If the sludge is dewatered by the conventional method, a large amount of scum is produced in the gravity concentration tank which thus adversely affects treatment water. Further, concentrated sludge is discharged in a state such that it is not sufficiently concentrated under gravity. Furthermore, because the concentrated sludge thus obtained contains gaseous components to a certain extent, the mixing with a polymer flocculating agent cannot efficiently be performed in the concentration-type flocculation reaction tank, and a high rate of injected chemicals is required in order to produce sufficiently flocculated floc. Moreover, because the flocculated floc originats from sludge containing a large amount of gaseous components, it has a poor dewaterability in the dewatering process, causing an increase of the water content in the dewatered cake.

According to a method of the present invention, sludge 1 delivered through pipelines is directly decompressed and deaerated to separate gaseous components in the sludge and discharge the gaseous components to the exterior.

Then, in Case 1, the deaerated sludge is concentrated under gravity in the gravity concentration tank 9 to produce concentrated sludge, flocculated in the subsequent flocculation reaction tank 11, and dewatered in the dewatering device 7. In Case 2, the deaerated sludge is not concentrated under gravity but is granulated and concentrated in the concentration-type flocculation reaction device 4, and is dewatered in the dewatering device 7. In Case 3, sludge which has risen up and has been concentrated in the decompressing device 2 is delivered to the concentrated sludge mixing tank 12, the sludge which has not risen up in the decompressing device 2 is delivered to the gravity concentration tank 9, and the settled and concentrated sludge which has been concentrated under gravity in the gravity concentration tank 9 is mixed with the floating and concentrated sludge as concentrated and mixed sludge in the concentrated sludge mixing tank 12. The concentrated and mixed sludge 13 is flocculated in the flocculation reaction tank 11 and then dewatered in the dewatering device 7. Since gaseous components in the sludge are removed after either decompressing process, it is possible to improve the flocculating tendency, and to reduce odor, the rate of injected chemicals, and the water content in the cake. Further, it is possible to avoid adverse effects which would be caused by inactivation of microorganisms.

**Table 1.**

| Examples of treatment performance | | | | |
|---|---|---|---|---|
| Operating conditions | Method according to the present invention | | | Conventional Method |
| | Case 1 | Case 2 | Case 3 | |
| Concentration of flowing sludge | 0.4 - 0.7 % | 0.4 - 0.7 % | 0.4 - 0.7 % | 0.4 - 0.7 % |
| Concentration of sludge discharged from gravity concentration tank | 1.5-2.3% | - | 1.8-2.5% | 0.9 - 1.6% |
| Concentration of sludge discharged from concentration-type flocculation reaction tank | - | 2.2 - 3.2 % | - | - |
| Rate of adding flocculating agent in flocculation reaction tank | 0.51 - 0.62 % | 0.45 - 0.55 % | 0.48 - 0.61% | 0.59 - 0.78 % |
| Water content in dewatered cake | 76.2 - 79.8 % | 75.5 - 78.8 % | 75.1 - 78.3 % | 79.2 - 82.5% |
| Recovery ratio of SS*) | 74 - 89 % | 96 - 99 % | 76 - 91 % | 51 - 75 % |
| Concentration of H₂S produced from sludge | 0.7 - 3.1 ppm | 0.3 - 2.4 ppm | 0.5 - 2.8 ppm | 15 - 120 ppm |
| Concentration of H₂S produced from cake | 0.1 - 0.7 ppm | 0.1 - 0.2 ppm | 0.1 - 0.9 ppm | 3.5 - 46 ppm |

| | | | | |
|---|---|---|---|---|
| *) This recovery ratio of SS means a recovery ratio in the entire processes including the individual processes. | | | | |

Next, the examples of treatment performance shown in Table 1 will be described below.

In a process according to the conventional method, since the flowing sludge contained a large amount of gaseous components, scum was produced in the gravity concentration tank to lower the function of the gravity concentration. Therefore, the concentration of the sludge discharged from the gravity concentration tank was no more than 0.9 to 1.6 %. The rate of adding a flocculating agent in the subsequent flocculation reaction tank was 0.59 to 0.78 % (to SS), the recovery ratio of SS in the gravity concentration tank was 51 to 75 %, and the water content in the dewatered cake was 79.2 to 82.5 %.

According to the three cases of the present invention, the rate of adding a flocculating agent could be improved by about 0.1 to 0.2 point, the water content in the cake could be improved by about 4 points, and the recovery ratio of SS could be improved by about 20 points.

Further, in order to relatively compare the amount of odor components produced in all of the processes, the concentrations of H₂S were measured with sludge as described below. Deaerated sludge discharged from the decompressing device 2 in the process according to the present invention and sludge immediately before being introduced into the gravity concentration tank 9 in the process according to the conventional method were respectively extracted in the amount of 1L (liter) and immediately put into odor bags. Air was introduced into the odor bags in the amount of 1L (liter) to seal the sludge and the air at a ratio of liquid phase : gaseous phase = 1:1 (volume ratio).

Then, the odor bags were held still at 25°C for the residence time of the respective processes (the process according to the present invention = 1 hour and the process according to the conventional method = 9 hours (the gravity concentration tank: 8 hours + concentrated sludge reservoir tank: 1 hour)). Thereafter, the concentration of produced H₂S of gaseous phase was measured. The dewatered cakes obtained in the respective processes were extracted in dry weight of 30 g and immediately put into odor bags. Air was introduced into the odor bags in the amount of 1L (liter) to seal the sludge and the air. Then, the odor bags were held still at 25°C for 1 hour, and the concentration of produced H₂S of gaseous phase was measured.

As a result, while the concentration of H₂S produced from the sludge was 15 to 120 ppm in the conventional method, it was not more than about 3 ppm in any one of three cases according to the present invention. While the concentration of H₂S produced from the cake was 3.5 to 46 ppm in the conventional method, it was about 1 ppm according to the present invention. Thus, the odor produced from the sludge and the cake could largely be reduced.

As described above in detail, according to the present invention, with respect to organic sludge produced in sewage treatment plants or various waste water treatment plants, sludge which contains a large amount of gaseous components because of intensive decomposition is decompressed and deaerated and concentrated in a gravity concentration tank or a concentration-type flocculation reaction tank. Thus, odor components caused by sludge produced in the treatment plants can largely be reduced, the amount of a flocculating agent added to the sludge can largely be reduced, and the water content in dewatered cake can be reduced in a dewatering process. Further, since activities of microorganisms are restricted in a decompressing and deaerating process, it is possible to avoid adverse effects which would be caused by inactivation of microorganisms.

Further, because it is possible to dispense with a concentration process, which is a first stage in a conventional sludge treatment system, the cost of equipment and the running cost can be reduced.

### Industrial Applicability

The present invention is suitable for use in the field of treating a liquid in which floating suspension materials, oils, or the like are required to be concentrated in sewage treatment plants, various waste water treatment plants, or the like. According to the present invention, it is possible to improve gravity concentration, a flocculating tendency, and dewaterability of sludge, and to reduce the amount of odor produced.

## Claims

1. A liquid treatment method of concentrating or flocculating a floating suspension material in a liquid and then dewatering the floating suspension material, said liquid treatment method **characterized by**:
holding the liquid under a reduced pressure to change a portion of a gas contained in the liquid and a component dissolved in the liquid into gaseous phase, and after decompressing for restricting activation of microorganisms in the liquid, concentrating or flocculating and then dewatering sludge in the liquid.

2. A liquid treatment method according to claim 1, **characterized in that** said decompressing for restricting activation of microorganisms in the liquid comprises holding the liquid under a decompressed atmosphere having a pressure of 5 to 70 kPa for less than 15 minutes.

3. A liquid treatment method according to claim 1, **characterized in that** after said decompressing, the liquid is introduced into a gravity concentration tank, where the liquid is concentrated under gravity, and the gravity-concentrated sludge is dewatered by a dewatering device.

4. A liquid treatment method according to claim 1, **characterized in that** after said decompressing, the liquid is introduced into a flocculation reaction tank, where the liquid is flocculated, and the flocculated sludge is dewatered by a dewatering device.

5. A liquid treatment method according to claim 1, **characterized in that** after said decompressing, the liquid is introduced into a gravity concentration tank, where the liquid is concentrated under gravity, the gravity-concentrated sludge is introduced into a flocculation reaction tank, where the sludge is flocculated, and the flocculated sludge is dewatered by a dewatering device.

6. A liquid treatment method according to claim 4, **characterized in that**, in the flocculation reaction tank used prior to the dewatering device, a portion of separated water produced in the flocculation reaction tank is removed to an exterior of a system to increase the concentration of the flocculated sludge to be introduced into the dewatering device.

7. A liquid treatment method according to claim 1, **characterized in that** a device for said decompressing comprises a hermetically sealed vessel connected to a liquid supply pump, a vacuum pump, and a liquid drawing pump, wherein a liquid supplied under a reduced pressure is formed into a thin film and dewatered while applying a shearing force to the liquid.

8. A liquid treatment method according to claim 7, **characterized in that** the device for said decompressing continuously supplies the liquid and continuously discharges the liquid.

9. A liquid treatment method according to claim 4, **characterized in that**, in a concentration-type flocculation reaction tank, the liquid and a flocculating agent are supplied from a lower portion of the tank, the liquid and the flocculating agent are mixed by an agitating device rotating in the tank, only separated water is discharged to an exterior by a cylindrical separation screen provided at an upper portion of the tank, and flocculated floc attached to the separation screen is removed.

10. A liquid treatment method according to claim 9, **characterized in that** a scraper for removing the flocculated floc attached to the separation screen is coupled to the agitating device via a speed reducer and is rotated.

11. A liquid treatment method according to claim 7, **characterized in that**, with regard to the liquid introduced into the hermetically sealed vessel used for said decompressing, a liquid near a water surface in the vessel and a liquid near a bottom surface in the vessel are continuously discharged separately to an exterior of the vessel.

12. A liquid treatment method according to claim 11, **characterized by** treating a liquid containing a floating suspension material, attaching bubbles produced from the liquid under a reduced pressure to the floating suspension material, and separately discharging a portion or all of the floating suspension material which has risen up together with the bubbles and been concentrated and a remaining liquid which has been lowered in its concentration of floating suspension material.

13. A liquid treatment method according to claim 1, **characterized by** treating a liquid containing a floating suspension material, separating the liquid in a decompressed vessel into a liquid near a water surface and a liquid near bottom, introducing a liquid drawn from near the bottom in the device into a gravity settling concentration tank to form settled and concentrated sludge, and mixing the settled and concentrated sludge with floating and concentrated sludge drawn from the liquid near the water surface to produce final concentrated sludge.

14. A liquid treatment method according to claim 1, **characterized by**, for separating a liquid, supplying a liquid to be treated into a hermetically sealed vessel, decompressing a gaseous phase at an upper portion of the vessel, and continuously discharging a liquid near a water surface in the vessel and a liquid near a bottom of the vessel separately to an exterior of the vessel.

15. A liquid treatment method according to claim 14, **characterized by** treating a liquid containing a floating suspension material, attaching bubbles produced from the liquid under a reduced pressure to the floating suspension material, and separately discharging a portion or all of the floating suspension material which has risen up together with the bubbles and been concentrated and a remaining liquid which has been lowered in its concentration of floating suspension material.

16. A liquid treatment method according to claim 1, **characterized by**, for dewatering organic sludge, holding the sludge under a decompressing condition to deaerate the sludge, then introducing the sludge directly into a flocculation reaction tank without a concentration process, flocculating the sludge in the flocculation reaction tank, and dewatering the sludge by a dewatering device.

17. A treatment method according to claim 16, **characterized by** using, as the flocculation reaction tank, a concentration-type flocculation reaction tank having a function of enhancing the concentration of flocculated sludge to be introduced into the dewatering device by removing a portion of separated water produced in the flocculation reaction tank to an exterior of a system.

18. A liquid treatment apparatus **characterized in that** the apparatus comprises a hermetically sealed vessel, means for supplying a liquid to be treated into said vessel, means for decompressing a gaseous phase at an upper portion of said vessel, means for continuously discharging a portion of the liquid under a reduced pressure from a lower portion of said vessel, and means for continuously discharging a portion near a water surface of the liquid under a reduced pressure, wherein the liquid is decompressed and deaerated so as to restrict activation of microorganisms in the liquid.

19. A liquid treatment apparatus **characterized by** comprising a decompressing device having a hermetically sealed vessel, a pump for supplying a liquid to be treated into said vessel, a vacuum pump for holding an interior of said vessel under a decompression atmosphere, and a pump for drawing the liquid to be treated which has been decompressed so as to restrict activation of microorganisms, and a gravity settling concentration tank and/or a flocculation reaction tank.

20. A liquid treatment apparatus according to claim 19, **characterized in that** said decompressing device comprises a mechanism in said vessel for forming a liquid to be treated, which has been supplied under a decompression atmosphere, into a thin film and for applying a shearing force.

21. A liquid treatment apparatus according to claim 19, **characterized in that** said decompressing device comprises a mechanism for continuously supplying and continuously discharging the liquid to be treated.

22. A liquid treatment apparatus according to claim 19, **characterized in that** said flocculation reaction tank comprises a concentration-type flocculation reaction tank into which sludge and a flocculating agent are supplied from a lower portion of the tank, and in which the sludge and the flocculating agent are mixed by an agitating device rotating in the tank, only separated water is discharged to an exterior of a system by a cylindrical separation screen provided at an upper portion of the tank, and a scraper for removing flocculated floc attached to said separation screen is coupled to said agitating device via a speed reducer and is rotated.
